# EUROPÄISCHE PATENTSCHRIFT

(11) **EP 0 742 922 B1**
(45) Veröffentlichungstag und Bekanntmachung des Hinweises auf die Patenterteilung: **26.08.1998**
(21) Anmeldenummer: 95907603.5
(22) Anmeldetag: 25.01.1995
(51) Int. Cl.: G06F 17/60, H04L 12/58

(54) **VERFAHREN ZUM VERSENDEN VON DOKUMENTEN, SOWIE TEILNEHMERSTATIONEN UND KONVERTERSTATION DAFÜR**
PROCESS FOR SENDING DOCUMENTS AS WELL AS USER STATIONS AND CONVERTER STATIONS THEREFOR
PROCEDE PERMETTANT D'ENVOYER DES DOCUMENTS, POSTES D'ABONNES ET POSTE DE CONVERSION UTILISE A CET EFFET

(30) Priorität: 05.02.1994 DE 4403626
(43) Veröffentlichungstag der Anmeldung: 20.11.1996
(73) Patentinhaber: ALCATEL ALSTHOM COMPAGNIE GENERALE D'ELECTRICITE, 75008 Paris (FR)
(72) Erfinder: FÄLKER, Gerrit, D-70825 Korntal (DE)
(74) Vertreter: Brose, Gerhard, Dipl.-Ing.
(86) Internationale Anmeldenummer: EP9500257
(87) Internationale Veröffentlichungsnummer: WO9521418

(56) Entgegenhaltungen:
- EP-A- 0 462 725
- EP-A- 0 544 608
- EP-A- 0 615 368
- WO-A-91/01608
- US-A- 4 677 611
- US-A- 5 239 577
- US-A- 5 265 033
- US-A- 5 283 887
- US-A- 5 406 557
- PATENT ABSTRACTS OF JAPAN vol. 015 no. 326 (E-1102) ,20.August 1991 & JP,A,03 123240 (NEC CORP) 27.Mai 1991,
- PATENT ABSTRACTS OF JAPAN vol. 014 no. 133 (E-0902) ,13.März 1990 & JP,A,02 001659 (NEC CORP) 5.Januar 1990,

## Beschreibung

Die Erfindung betrifft ein Verfahren zum Versenden von Dokumenten nach dem Oberbegriff von Anspruch 1, Teilnehmerstationen zum Versenden von Dokumenten nach dem Oberbegriff von Anspruch 10 und Anspruch 12, sowie eine Konverterstation zum Versenden von Dokumenten nach dem Oberbegriff von Anspruch 11.

Die Erfindung geht von einem System zum Austausch von Geschäftsdokumenten über Kommunikationsnetze aus, wie es in dem Artikel "Edifakt soll den elektronischen Geschäftsverkehr vereinfachen" von Herbert E. Thomas, auf den Seiten 16 und 17 der Zeitschrift "Computerwoche" vom 28. Juni 1987 beschrieben ist.

Mit diesem System ist es möglich, Dokumente zwischen verschiedenen Unternehmen auf elektronischem Wege auszutauschen. Solche Dokumente sind z.B. Rechnungen, Bestellungen oder Lieferscheine. Für den Austausch solcher Dokumente bedient man sich dabei eines weltweit einheitlichen Datenformats, das Edifakt (= Electronic Data Interchange for Administration, Commerce and Transport) genannt wird. Dieses Datenformat schreibt z.B. vor, wie die Syntax eines Dokuments auszusehen hat oder welche Datenelemente bei verschiedenen Geschäftsvorfällen enthalten sein müssen.

Darüberhinaus stellt sie eine Anzahl von genormten Nachrichten bereit, die als Basis für den Datenaustausch bei international strukturierten Geschäftsvorfällen dienen.

Die Dokumente, die dem Datenformat Edifakt entsprechen, werden dabei mittels eines Anwendungsprotokolls auf der Schicht 7 des OSI-Referenzmodells zwischen den Unternehmen ausgetauscht. Dies macht die Datenübertragung unabhängig von den tieferliegenden Kommunikationsschichten und damit unabhängig von der verwendeten tieferliegenden Hard- und Software. Bevor Dokumente übertragen werden, müssen sie jedoch von dem Datenformat, in dem sie in dem jeweiligen Unternehmen erstellt worden sind (Inhouse-Datenformat oder teilnehmerspezifisches Datenformat), in das Edifakt-Datenformat konvertiert werden. Dies ist notwendig, da Hilfsmittel zum Erstellen von Dokumenten, z.B. Textverarbeitungsprogramme in der Regel nicht das Edifakt-Datenformate verwenden. Es existiert hierbei eine große Vielzahl von solchen teilnehmerspezifischen Datenformaten.

Dieses System zum elektronischen Austausch von Geschäftsdokumenten hat hierbei den Nachteil, daß sowohl Sender als auch Empfänger über die nötigen Einrichtungen für das Senden bzw. Empfangen von Edifakt-Dokumenten verfügen müssen. Da insbesondere kleinere Unternehmen und vor allem Privat-Personen auf absehbare Zeit nicht über solche Systeme verfügen werden, ist ein Großteil der Geschäftsdokumente oder auch Geschäft-Post wie bisher in Form eines Briefes auszudrucken, und an die Post zu transportieren, die dann die weitere Zustellung übernimmt.

Desweiteren sind elektronische Briefdienstanlagen, wie sie z.B. in der Patentschrift DE 24 32 398.6 beschrieben werden, bekannt. Mit solch einer Anlage ist es möglich, einen Brief an einen postalischen Empfänger zu versenden, wobei der Brief einen Teil seines Weges als elektronischer Brief zurück legt, d.h. in Form eines Datenblocks, der über ein Kommunikationsnetz gesendet wird. Der Erfindung liegt nun die Aufgabe zugrunde, Dokumente über ein Kommunikationsnetz an eine Vielzahl von unterschiedlich ausgestatteten Empfängern zu versenden.

Die Aufgabe wird gelöst durch ein Verfahren nach der Lehre von Anspruch 1, durch Teilnehmerstationen nach der Lehre von Anspruch 10 und nach der Lehre von Anspruch 12 und durch eine Konverterstation nach der Lehre von Anspruch 11.

Der Grundgedanke der Erfindung ist, beim Versenden von Dokumenten zuerst die Dokumente von einem teilnehmerspezifischen in ein einheitliches Datenformat zu wandeln und erst dann in einer Entscheidungs-Logik mittels des Dokuments im einheitlichen Datenformat zu entscheiden, ob das Dokument im weiteren als elektronisches Dokument zum Empfänger gesendet wird, oder ob es in einer Konverterstation vom einheitlichen in ein postalisches Datenformat konvertiert wird. Die Konverterstation versendet das Dokument dann zu einem Druckzentrum der Post, in dessen Einzugsbereich sich der Empfänger befindet. Dort wird das Dokument ausgedruckt und der Zustellung durch das Personal der Post zugeführt.

Vorteilhafte Ausgestaltungen der Erfindung sind den Unteransprüchen zu entnehmen.

Das Verfahren gemäß der Erfindung hat den Vorteil, daß ein Dokument auf dem jeweils für ihn günstigsten, möglichen Weg an seinen Empfänger gesendet wird. Der Absender muß sich dabei im Einzelfall keine Gedanken mehr über die Art der Versendung machen. Diese Entscheidung wird automatisch von einer Entscheidungs-Logik gefällt.

Desweiteren wird bei der Erfindung die Konvertierung zwischen den verschiedenen Datenformaten auf besonders vorteilhafte Weise durchgeführt. Die Konvertierung der verschiedenen teilnehmerspezifischen Datenformate in das einheitliche Datenformat findet beim Teilnehmer selber statt. Dies hat zwar den Nachteil, daß ein Dokument im Fall der postalischen Versendung zweimal konvertiert werden muß. Da alle Dokumente zuerst von dem jeweiligen teilnehmerspezifischen Datenformat in das einheitliche Datenformat konvertiert werden, ist so jedoch die Konvertierung in das postalische Datenformat an einer zentralen Stelle möglich, die so besonders gut ausgenutzt wird. Desweiteren ist es so nicht notwendig, eine Konvertiereinrichtung zu entwickeln, die jedes der teilnehmerspezifischen Datenformate in das doch recht spezielle postalische Datenformat konvertiert.

Als weiteren Vorteil ermöglicht es die Erfindung, die Teilnehmerstationen sehr einfach aufzubauen. Auch werden keine weiteren Verbindungen zu einem Netz benötigt, über das die postalischen Druckzentren erreicht werden können.

Im folgenden wird nun die Erfindung anhand zweier Ausführungsbeispiele unter Zuhilfenahme beiliegender Zeichnungen weiter erläutert.
- Fig. 1: zeigt eine symbolische Darstellung eines Systems zum Versenden von Dokumenten mit mehreren erfindungsgemäßen Teilnehmerstationen und mit einer erfindungsgemäßen Konverterstation für ein erstes und ein zweites Ausführungsbeispiel.
- Fig. 2: zeigt ein Blockschaltbild eines Ausschnittes aus dem System nach Fig. 1 für das erste Ausführungsbeispiel.
- Fig. 3: zeigt ein Blockschaltbild eines Ausschnittes aus dem System nach Fig. 1 für das zweite Ausführungsbeispiel.

Im ersten Beispiel wird nun die Anwendung des erfindungsgemäßen Verfahrens in einem System zum Versenden von Dokumenten erläutert, das mit mehreren erfindungsgemäßen Teilnehmerstationen und mit einer erfindungsgemäßen Konverterstation ausgestattet ist.

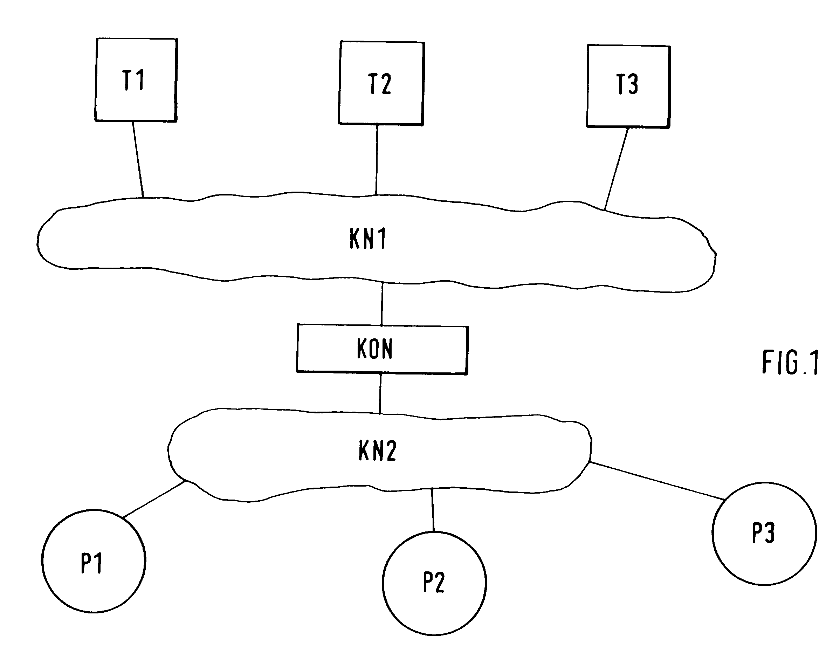

Fig. 1 zeigt drei Teilnehmerstationen T1 bis T3, zwei Weitverkehrskommunikationsnetze KN1 und KN2, eine Konverterstation KON und drei postalische Ausgabestationen P1 und P3. Die Teilnehmerstationen T1 bis T3 sind mit der Konverterstation KON über das Weitverkehrskommunikationsnetz KN1 und die Konverterstation KON über das Weitverkehrskommunikationsnetz KN2 mit den postalischen Ausgabestationen P1 bis P3 verbunden.

Die Teilnehmerstationen T1 bis T3 bestehen aus einem Rechner mit entsprechenden periphären Komponenten, die es ermöglichen, ein Dokument einzugeben, von einem ersten Datenformat in ein zweites Datenformat zu wandeln und in diesem Format über das Weitverkehrskommunikationsnetz KN1 an die Konverterstation KON zu senden.

Die Konverterstation KON empfängt über das Weitverkehrkommunikationsnetz KN1 Dokumente von den Teilnehmerstationen T1 bis T3. Sie entscheidet für jedes ankommende Dokument, ob es an seinen Empfänger über das Weitverkehrskommunikationsnetz KN1 gesendet wird, oder ob es in ein drittes, postalisches Datenformat gewandelt wird und anschließend über das Weitverkehrskommunikationsnetz KN2 an eine der postalischen Ausgabestationen P1 bis P3 gesendet wird.

Die postalischen Ausgabestationen P1 bis P3 sind Druckzentren der Post. Der Begriff Post steht hierbei für die Funktion des Zustellens von Briefen und umfaßt so sämtliche Anbieter dieser Funktion. Ebenso ist der Begriff postalisch zu verstehen. In jeder der postalischen Ausgabestationen P1 bis P3 werden die ankommenden Dokumente empfangen, die Dokumente werden in Form eines Briefes ausgedruckt und kuvertiert. Anschließend werden diese Dokumente in Briefform dem normalen Zustelldienst der Post zugeführt. Für den Empfang eines Dokuments durch eine der postalischen Ausgabestationen P1 bis P3 ist es notwendig, daß das Dokument im dritten, postalischen Datenformat vorliegt.

Es ist vorteilhaft, die postalischen Ausgabestationen P1 bis P3 den Zustellpostämtern der Post zuzuordnen.

Das Weitverkehrskommunikationsnetz KN1 ist als virtuelles Kommunikationsnetz auf der Schicht 7 des ISO-Referenzmodells zu betrachten. Diese Schicht wird auch Anwendungsschicht genannt. Das in diesem Weitverkehrskommunikationsnetz verwendete Anwendungsprotokoll ist EDI. Diesem Anwendungsprotokoll entspricht das Datenformat Edifakt.

Es ist auch möglich, ein andersartiges Weitverkehrskommunikationsnetz für das Weitverkehrskommunikationsnetz KN1 zu verwenden. Ein solches Kommunikationsnetz könnte z.B. ein elektronisches Post-System sein, das ein Anwendungsprotokoll nach dem CCITT-Standard X.400 verwendet.

Bei dem Kommunikationsnetz KN2 handelt es sich um ein Daten- oder Fernsprechnetz. Die Daten von der Konvertereinrichtung KON werden über dieses Kommunikationsnetz in entsprechend kodierter Form mittels eines geeigneten Kommunikationsprotokolls übertragen. Es ist jedoch ebenfalls möglich, die gleiche Art von Weitverkehrskommunikationsnetzen wie für das Weitverkehrskommunikationsnetz KN1 zu verwenden.

Ein Dokument wird so in einer der Teilnehmerstationen T1 bis T3 eingegeben. Wenn es versendet werden soll, wird es von dem ersten Datenformat in das zweite Datenformat konvertiert und über das Weitverkehrskommunikationsnetz KN1 an die Konverterstation KON gesendet. Dort erfolgt dann die Entscheidung, ob das Dokument in dem zweiten Datenformat über das Weitverkehrskommunikationsnetz KN1 an die Teilnehmerstation des Empfängers gesendet werden soll, oder ob es von dem zweiten Datenformat in das dritte Datenformat konvertiert wird und anschließend an eine der postalischen Ausgabestationen P1 bis P3 über das Weitverkehrskommunikationsnetz KN2 gesendet wird.

Der genaue Ablauf wird nun am Beispiel des Versendens eines Dokuments von der Teilnehmerstation T1 an die Teilnehmerstation T2, sowie am Beispiel des Versendens eines Briefes von der Teilnehmerstation T1 an einen postalischen Empfänger erläutert, der von der postalischen Einrichtung P1 bedient wird.

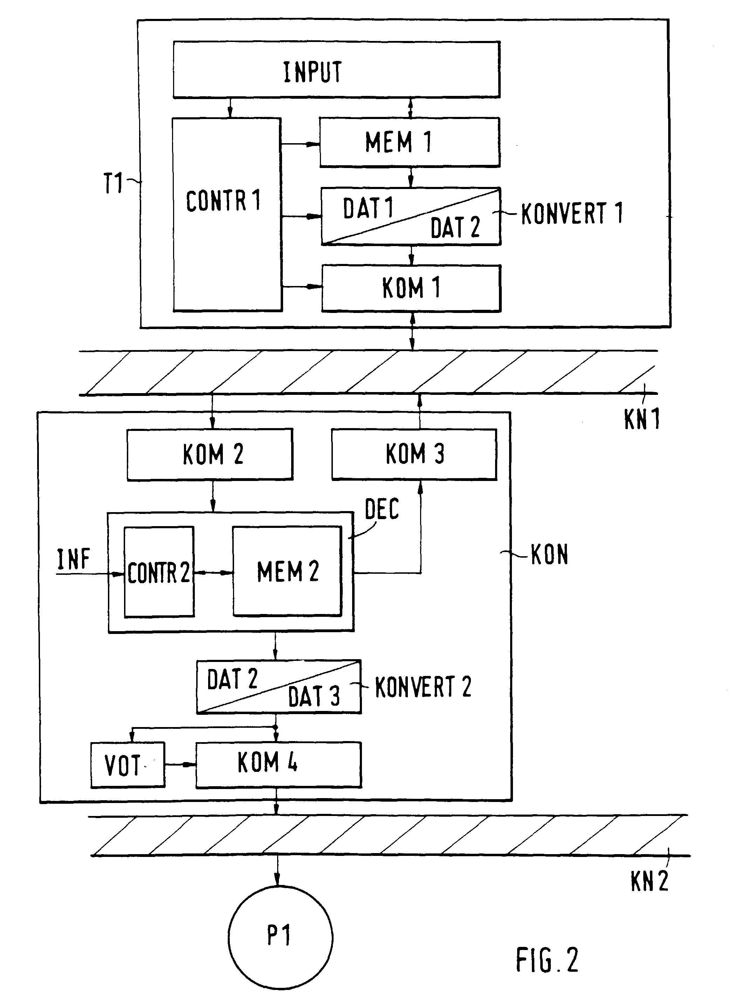

Fig. 2 zeigt die Teilnehmerstation T1, die Konverterstation KON, die postalische Ausgabestation P1 und die Weitverkehrskommunikationsnetze KN1 und KN2. Die Teilnehmerstation T1 und die Konverterstation KON tauschen Daten über das Weitverkehrskommunikationsnetz KN1 aus. Die Konverterstation KON sendet Daten an das Weitverkehrskommunikationsnetz KN2 und die postalische Ausgabestation P1 empfängt Daten von diesem.

Die Teilnehmerstation T1 weist eine Eingabeeinrichtung INPUT, eine Steuereinrichtung CONTR1, eine Speichereinrichtung MEM1, eine Konvertiereinrichtung KONVERT1 und eine Kommunikationseinrichtung KOM1 auf.

Die Eingabeeinrichtung INPUT tauscht Daten mit der Speichereinrichtung MEM1 aus und sendet Steuerbefehle an die Steuereinrichtung CONTR1. Die Speichereinrichtung MEM1, die Konvertiereinrichtung KONVERT1 und die Kommunikationseinrichtung KOM1 empfangen Steuerbefehle von der Steuereinrichtung CONTR1. Die Speichereinrichtung MEM1 sendet Dokumente an die Konvertiereinrichtung KONVERT1 und diese an die Kommunikationseinrichtung KOM1. Diese tauscht Daten über das Weitverkehrskommunikationsnetz KN1 aus.

Die Eingabeeinrichtung INPUT wird von einem EDV-Verfahren gebildet. Mit solch einem System können Dokumente erstellt, gespeichert und dargestellt werden. Aus dem EDV-Verfahren heraus werden Steuerbefehle gegeben, die an die Steuereinrichtung CONTR1 weitergeleitet werden und das Versenden eines Dokuments veranlassen.

Es ist auch möglich, daß die Eingabeeinrichtung INPUT noch über weitere Funktionen verfügt. Solche Funktionen könnten z.B. Hilfsfunktionen für das Erstellen von Tabellen oder für die Erstellung von elektronischen Formularen sein. Es ist auch möglich, daß die Eingabeeinrichtung INPUT allein dem Einlesen von Dokumenten dient.

Die von der Eingabeeinrichtung INPUT bearbeiteten Dokumente werden in der Speichereinrichtung MEM1 zwischengespeichert. Wenn ein Dokument versendet werden soll, wird es der Speichereinrichtung MEM1 entnommen. Die in der Speichereinrichtung MEM1 abgelegten Dokumente entsprechen alle einem Datenformat DAT1, bei dem es sich um ein teilnehmerspezifisches Datenformat handelt. Es ist von dem als Eingabeeinrichtung INPUT verwendeten EDV-Verfahren abhängig.

Die Konvertiereinrichtung KONVERT1 konvertiert das Datenformat von Dokumenten von dem Datenformat DAT1 in ein Datenformat DAT2. Bei dem Datenformat DAT2 handelt es sich um das Datenformat Edifakt. Dieses Datenformat ist für die elektronische Abwicklung von Geschäftsvorgängen, z.B. Rechnungen, Bestellungen oder Lieferscheinen vorgesehen.

Es ist auch möglich, ein anderes Datenformat für das Datenformat DAT2 zu verwenden. Z.B. kann auch ein Datenformat für elektronische Briefdienste, etwa nach dem CCITT-Standard X.400 verwendet werden.

Die Kommunikationseinrichtung KOM1 ermöglicht das Versenden von Dokumenten mittels eines Anwendungsprotokolls, das dem Datenformat DAT2 entspricht. Bei diesem Anwendungsprotokoll handelt es sich um EDI. Bei der möglichen Verwendung eines anderen zweiten Datenformates wird ein anderes, diesem entsprechendes Anwendungsprotokoll verwendet.

Die Steuereinrichtung CONTR1 steuert das Versenden von Dokumenten.

Ein Dokument wird so mittels des EDV-Verfahrens der Eingabeeinrichtung INPUT erstellt und in der Speichereinrichtung MEM1 zwischengespeichert. Erfolgt nun über die Eingabeeinrichtung INPUT ein Steuerbefehl an die Steuereinrichtung CONTR1, das Dokument zu versenden, so veranlaßt sie das Auslesen dieses Dokuments aus der Speichereinrichtung MEM1, das Weiterreichen des Dokuments zu der Konvertiereinrichtung KONVERT1, das Konvertieren dieses Dokuments in der Konvertiereinrichtung KONVERT1 in das zweite Datenformat DAT2 und das Versenden des so konvertierten Dokuments durch die Kommunikationseinrichtung KOM1. Sie steuert hierbei die Kommunikationseinrichtung KOM1 derart, daß sie das Dokument unabhängig von dem Empfänger stets an die Konverterstation KON sendet.

Die Konverterstation KON weist drei Kommunikationseinrichtungen KOM2, KOM3 und KOM4, eine Entscheidungs-Logik DEC, eine Konvertiereinrichtung KONVERT2 und eine Zieleinrichtung VOT auf.

Die Kommunikationseinrichtung KOM2 empfängt Daten über das Weitverkehrskommunikationsnetz KN1 und die Kommunikationseinrichtung KOM3 sendet Daten über dieses. Die Entscheidungs-Logik DEC empfängt Dokumente von der Kommunikationseinrichtung KOM2 und sendet Dokumente an die Kommunikationseinrichtung KOM3 und an die Konvertiereinrichtung KONVERT2. Weiter empfängt sie Daten INF. Die Konvertiereinrichtung KONVERT2 sendet Dokumente an die Zieleinrichtung VOT und an die Kommunikationseinrichtung KOM4. Die Kommunikationseinrichtung KOM4 empfängt Steuerbefehle von der Zieleinrichtung VOT und sendet Daten über das Weitverkehrskommunikationsnetz KN2.

Die Kommunikationseinrichtungen KOM2 und KOM3 sind wie die Kommunikationseinrichtungen KOM1 aufgebaut, mit dem Unterschied, daß die Kommunikationseinrichtung KOM2 nur für den Empfang und die Kommunikationseinrichtung KOM3 nur für das Senden von Dokumenten über das Weitverkehrskommunikationsnetz KN1 geeignet ist.

Die Konvertiereinrichtung KONVERT2 konvertiert das Datenformat von Dokumenten von dem Datenformat DAT2 in ein Datenformat DAT3. Bei dem Datenformat DAT3 handelt es sich um ein postalisches Datenformat. Die postalischen Ausgabestationen P1 bis P3 sind nur fähig, Dokumente in diesem Datenformat auszuwerten. Ein solches Datenformat ist z.B. ePost, das von der Deutschen Bundespost verwendet wird.

Die Kommunikationseinrichtung KOM4 dient zum Versenden von Dokumenten über das Weitverkehrskommunikationsnetz KN2 an eine der postalischen Ausgabestationen P1 bis P3.

Die Zieleinrichtung VOT ermittelt aus einem zu versendendem Dokument im Datenformat DAT3 die Zieladresse derjenigen postalischen Ausgabestation, in deren Zustellbereich der postalische Empfänger liegt, an den dieses Dokument gerichtet ist.

Auf die Zieleinrichtung VOT könnte auch verzichtet werden. Hierfür müßten in dem Weitverkehrskommunikationsnetz KN2 entsprechende Dienste zur Verfügung stehen.

Die Entscheidungs-Logik DEC trifft die Entscheidung, ob ein Dokument über das Weitverkehrskommunikationsnetz KN1 oder über den postalischen Weg an den Empfänger gesendet wird. Es weist eine Steuereinrichtung CONTR2 und Speichereinrichtung MEM2 auf, die miteinander Daten austauschen.

In der Speichereinrichtung MEM2 sind Daten darüber abgelegt, welche der Teilnehmerstationen T1 bis T3 miteinander mittels des Anwendungsprotokolls EDI kommunizieren können oder dürfen. Darüber hinaus können auch weitere Daten über die Teilnehmerstationen T1 bis T3 in der Speichereinrichtung MEM2 abgelegt sein, die z.B. die für die Kommunikationen mit ihnen verwendbaren Anwendungsprotokolle oder Betriebsmittel betreffen. Auch Daten über das Weitverkehrskommunikationsnetz KN1 können in der Speichereinrichtung MEM2 abgelegt sein.

Die Steuereinrichtung CONTR2 ermittelt aus einem an der Entscheidungs-Logik DEC ankommenden Dokument in dem Datenformat DAT2 die Adresse des Absenders und des Empfängers. Mittels dieser Daten und der in der Speichereinrichtung MEM2 abgelegten Daten trifft sie sodann die Entscheidung. Zusätzlich kann die Steuereinrichtung CONTR2 für diese Entscheidung weitere Daten heranziehen, die durch die Daten INF bereitgestellt werden. Die Daten INF können z.B. durch eine Eingabeeinrichtung in die Konverterstation KON eingegeben werden oder über das Weitverkehrskommunikationsnetz KN1 von einer der Teilnehmerstationen T1 bis T3 an die Konverterstation KON gesendet werden.

Die Daten INF könnten auch Daten über den Zustand des Weitverkehrskommunikationsnetzes KN1 oder anderer Betriebsmittel sein. Es kann auch vorteilhaft sein, einen Teil der Daten INF in der Speichereinrichtung MEM2 abzulegen. Dies könnte z.B. zur ständigen Aktualisierung bestimmter Umgebungsdaten verwendet werden.

Daten, die die Entscheidung der Steuereinrichtung CONTR2 beeinflussen, könnten auch direkt in der Teilnehmerstation T1 in das an der Entscheiderlogik DEC ankommende Dokument eingetragen worden sein.

Die Entscheiderlogik DEC kann auch zwischen mehr als zwei Alternativen entscheiden. Z.B. kann eine solche dritte Alternative sein, daß das Dokument durch eine weitere Konvertiereinrichtung in ein weiteres Datenformat konvertiert und mittels eines diesem Datenformat entsprechenden Anwendungsprotokoll über ein drittes Weitverkehrskommunikationsnetz an den Empfänger gesendet wird. Ein solches drittes Weitverkehrskommunikationsnetz könnte z.B. ein elektronisches Postsystem nach dem Industriestandard X.400 sein. Damit wäre es neben dem Versenden über EDI und der postalischen Zustellung auch möglich, ein Dokument über ein elektronisches Post-System an den Empfänger zu senden.

Ein Dokument wird nun von der Teilnehmerstation T1 mittels eines Anwendungsprotokolls über das Weitverkehrskommunikationsnetz KN1 an die Konverterstation KON gesendet. In dieser wird es in der Kommunikationseinrichtung KOM2 empfangen und an die Entscheidungs-Logik DEC weitergereicht. Diese ermittelt aus dem Dokument Absender und Empfänger und bestimmt sodann die zwischen diesen Partnern bestehenden möglichen Kommunikationsbeziehungen. Ist eine Kommunikation zwischen ihnen über das Weitverkehrskommunikationsnetz KN1 mittels des Anwendungsprotokolls EDI möglich und auch vereinbart, so leitet sie das Dokument an die Kommunikationseinrichtung KOM3 weiter. Im anderen Fall erfolgt eine Weiterleitung an die Konvertiereinrichtung KONVERT2.

Die Kommunikationseinrichtung KOM3 ermittelt sodann aus dem Dokument den Empfänger, in unserem Beispiel die Teilnehmerstation T3, und sendet das Dokument über das Weitverkehrskommunikationsnetz KN1 mittels des Anwendungsprotokolls EDI an die Teilnehmerstation T3.

Die Konvertiereinrichtung KONVERT2 konvertiert das Datenformat des Dokuments in das postalische Datenformat DAT3 und reicht es an die Kommunikationseinrichtung KOM4 weiter, die das Dokument dann über das Weitverkehrskommunikationsnetz KN2, unter der Zuhilfenahme der Steuerbefehle von der Zieleinrichtung VOT, an die postalische Ausgabestation P1 sendet.

Es ist auch möglich, daß anstelle des Weitverkehrskommunkationsnetzes KN1 zwei Weitverkehrskommunikationsnetze verwendet werden. In diesem Fall würde z.B. die Kommunikationseinrichtung KOM1 ein Dokument an die Kommunikationseinrichtung KOM2 nicht mittels des Anwendungsprotokolls EDI, sondern mittels eines anderen Protokolls zur Übertragung von Daten über Weitverkehrskommunikationsnetze transparent senden. Solch ein Protokoll könnte z.B. ein Protokoll für ein propriertäre File-Transfer-System, aber auch für ein elektronisches Post-System (mail enabled process) sein. Diese beiden Weitverkehrskommunikationsnetze könnten so auch die Netze zweier verschiedener Dienstanbieter sein, wobei der erste Dienstanbieter beispielsweise den File-Transfer-Dienst und der zweite Dienstanbieter den EDI-Dienst anbieten würde.

In dem zweiten Ausführungsbeispiel wird die Anwendung des erfindungsgemäßen Verfahrens in einem System zum Versenden von Dokumenten mit mehreren erfindungsgemäßen Teilnehmerstationen und mit einer Konverterstation erläutert.

Die Struktur des Systems ist gleich der des Systems im ersten Ausführungsbeispiel aufgebaut, also gemäß Fig. 1. Im Unterschied zum ersten Ausführungsbeispiel ist jedoch die Entscheidungs-Logik jeweils in den Teilnehmerstationen angesiedelt.

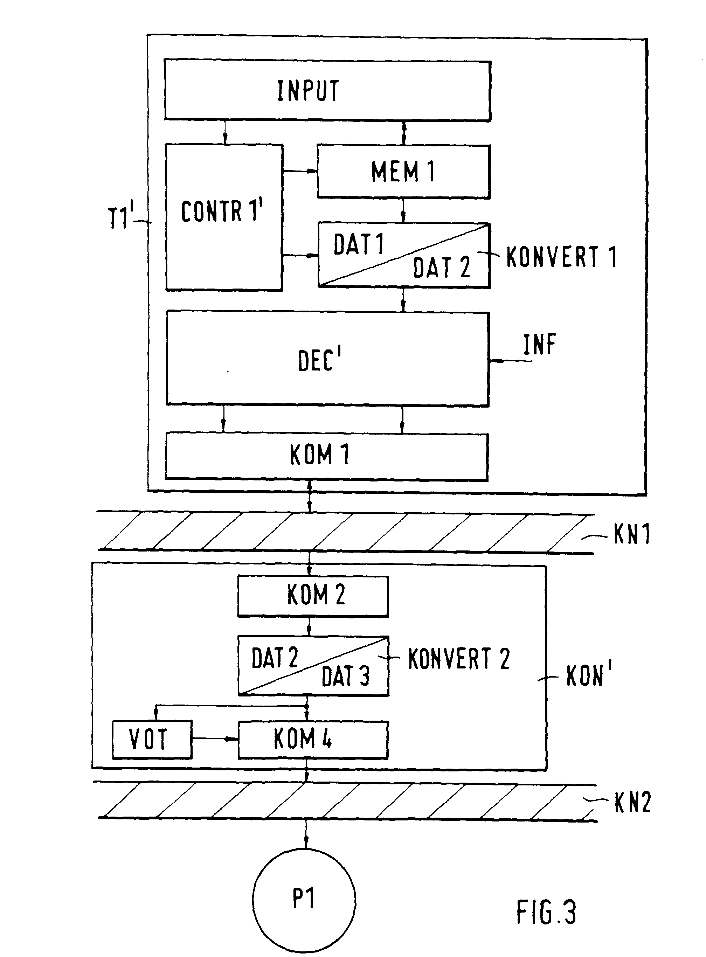

Die nähere Funktionsweise wird nun anhand von Fig. 3 beschrieben. Die Bezeichung der verschiedenen Einrichtungen ist gleich der der entsprechenden Einrichtungen im Beispiel nach Fig. 2. Besteht ein Unterschied in der Funktionsweise, so wird der Bezeichnung nach Fig. 2 ein ' hinzugefügt. Nur in diesem Fall wird dann kurz auf die Funktionsweise eingegangen.

Fig. 3 zeigt eine Teilnehmerstation T1', eine Konverterstation KON', die postalische Ausgabestation P1 und die Weitverkehrskommunikationsnetze KN1 und KN2. Die Teilnehmerstation T1' und die Konverterstation KON' tauschen über das Weitverkehrskommunikationsnetz KN1 Daten aus. Die Konverterstation KON' sendet und die postalische Ausgabestation P1 empfängt Daten über das Weitverkehrskommunikationsnetz KN2.

Im Gegensatz zu der Teilnehmerstation T1 und der Konverterstation KON enthält hier die Teilnehmerstation T1' eine Entscheidungs-Logik und die Konverterstation KON' keine Entscheidungs-Logik.

Die Teilnehmerstation T1' weist die Eingabeeinrichtung INPUT, die Speichereinrichtung MEM1, die Konvertiereinrichtung KONVERT1, eine Entscheidungs-Logik DEC', eine Steuereinrichtung CONTR1' und die Kommunikationseinrichtung KOM1 auf.

Die Eingabeeinrichtung INPUT tauscht Daten mit der Speichereinrichtung MEM1 aus und sendet Steuerbefehle an die Steuereinrichtung CONTR1'. Die Speichereinrichtung MEM1 und die Konvertiereinrichtung KONVERT1 empfangen Steuerbefehle von der Steuereinrichtung CONTR1'. Die Speichereinrichtung MEM1 sendet Dokumente an die Konvertiereinrichtung KONVERT1 und diese an die Entscheidungs-Logik DEC'. Die Entscheidungs-Logik DEC' sendet Dokumente und Steuerbefehle an die Kommunikationseinrichtung KOM1. Diese tauscht Daten über das Weitverkehrskommunikationsnetz KN1 aus.

Im Gegensatz zu der Entscheidungs-Logik DEC ist es in der Entscheidungs-Logik DEC' nicht notwendig, dem Dokument die Adresse des Absenders zu entnehmen, da nur Dokumente von der Teilnehmerstation T1' an der Entscheidungs-Logik DEC' ankommen. Die Steuereinrichtung CONTR1' gibt nicht wie die Steuereinrichtung CONTR1 der Kommunikationseinrichtung KOM1 Steuerbefehle über das Ziel eines Dokuments.

Die Konverterstation KON' weist die beiden Kommunikationseinrichtungen KOM2 und KOM4, die Konvertiereinrichtung KONVERT2 und die Zieleinrichtung VOT auf. Die Kommunikationseinrichtung KOM2 empfängt Daten über das Weitverkehrskommunikationsnetz KN1 und sendet Dokumente an die Konvertiereinrichtung KONVERT2. Die Konvertiereinrichtung KONVERT2 sendet Dokumente an die Kommunikationseinrichtung KOM4 und an die Zieleinrichtung VOT, die Steuerbefehle an die Kommunikationseinrichtung KOM4 sendet. Die Kommunikationseinrichtung KOM4 sendet Daten über das Weitverkehrskommunikationsnetz KN2.

Ein Dokument wird nun in dem EDV-Verfahren der Eingabeeinrichtung INPUT erstellt. Für das Versenden des Dokuments wird ein Steuerbefehl über die Eingabeeinrichtung INPUT an die Steuereinrichtung CONTR1' gegeben. Diese veranlaßt dann, daß das in der Speichereinrichtung MEM1 im ersten Datenformat zwischengespeicherte Dokument an die Konvertiereinrichtung KONVERT1 weitergereicht wird. Diese wandelt sodann das Datenformat des Dokuments vom Datenformat DAT1 in das Datenformat DAT2 um. Die Entscheidungs-Logik DEC' ermittelt aus dem Dokument im Datenformat DAT2 den Empfänger des Dokuments und entscheidet damit und mit den ihr zur Verfügung stehenden Daten, ob das Dokument über das Weitverkehrskommunikationsnetz KN1 an den Empfänger gesendet wird oder im per Post zugestellt wird. Sie reicht das Dokument an die Kommunikationseinrichtung KOM1 weiter und veranlaßt sie, das Dokument im ersten Fall über das Weitverkehrskommunikationsnetz KN1 an die Teilnehmerstation des Empfängers zu senden und im zweiten Fall über das Weitverkehrskommunikationsnetz KN1 an die Konverterstation KON'zu senden. In beiden Fällen wird das Anwendungsprotokoll EDI für das Versenden des Dokuments verwendet.

Im zweiten Fall wird das Dokument von der Kommunikationseinrichtung KOM2 der Konverterstation KON' empfangen. Anschließend wird es von der Konvertiereinrichtung KONVERT2 vom Datenformat DAT2 in das Datenformat DAT3 konvertiert. Dann wird es an die Kommunikationseinrichtung KOM4 weitergereicht, die es über das Weitverkehrskommunikationsnetz KN2 an die postalische Ausgabestation P1 sendet, in der es als Brief ausgedruckt wird. Danach wird es der postalischen Zustellung an den Empfänger zugeführt.

Es ist in den beiden Ausführungsbeispielen auch möglich, eine andere Zahl von Teilnehmerstationen und postalischen Ausgabestationen zu verwenden. Auch mehr als eine Konverterstation kann eingesetzt werden. So könnte z.B. jede von mehreren Konverterstationen eine bestimmte Zahl von Teilnehmerstationen betreuen.

## Patentansprüche

1. Verfahren zum Versenden von Dokumenten, bei dem in einer Teilnehmerstation (T1, T2, T3; T1') ein Dokument für das Versenden an einen Empfänger von einem ersten Datenformat (DAT1) in ein zweites Datenformat (DAT2) konvertiert wird, wobei das zweite Datenformat (DAT 2) einem ersten Anwendungsprotokoll entspricht, **dadurch gekennzeichnet,** daß nach der Konvertierung in das zweite Datenformat (DAT2) in einer Entscheidungs-Logik (DEC; DEC') mittels des Dokuments im zweiten Datenformat (DAT2) entschieden wird, ob das Dokument an den Empfänger mittels des ersten Anwendungsprotokolls versendbar ist oder nicht, daß im Fall der Versendbarkeit das konvertierte Dokument mittels des ersten Anwendungsprotokolls an eine Teilnehmerstation (T1, T2, T3; T1') des Empfängers gesendet wird und daß ansonsten eine Konverterstation (KON; KON') das konvertierte Dokument in ein drittes, postalisches Datenformat (DAT3) konvertiert und dann an eine postalische Ausgabestation (P1, P2, P3) sendet, die das Dokument dann ausdruckt.

2. Verfahren nach Anspruch 1, dadurch gekennzeichnet, daß für den Fall, daß die Teilnehmerstation (T1') die Entscheidungs-Logik (DEC') enthält, die Teilnehmerstation (T1') bei Nicht-Zutreffen der Versendbarkeit mittels des ersten Anwendungsprotokolls das Dokument an die Konverterstation sendet.

3. Verfahren nach Anspruch 1, dadurch gekennzeichnet, daß für den Fall, daß die Konverterstation (KON) die Entscheidungs-Logik (DEC) enthält, die Konverterstation (KON) das Dokument an die Teilnehmerstation (T1, T2, T3) oder an die postalische Ausgabestation (P1, P2, P3) sendet.

4. Verfahren nach Anspruch 3, dadurch gekennzeichnet, daß das Dokument von der Teilnehmerstation (T1, T2, T3; T1') mittels des ersten Anwendungsprotokolls an die Konverterstation (KON; KON') gesendet wird.

5. Verfahren nach Anspruch 3, dadurch gekennzeichnet, daß das Dokument von der Teilnehmerstation (T1, T2, T3; T1') transparent mittels eines weiteren Protokolls an die Konverterstation (KON; KON') gesendet wird.

6. Verfahren nach Anspruch 1, dadurch gekennzeichnet, daß es sich bei dem ersten Anwendungsprotokoll um ein Protokoll für den elektronischen Geschäftsverkehr handelt.

7. Verfahren nach Anspruch 1, dadurch gekennzeichnet, daß die Entscheidungs-Logik (DEC; DEC') weiter die Möglichkeit hat, sich für die Versendung mittels eines zweiten Anwendungsprotokolls zu entscheiden.

8. Verfahren nach Anspruch 7, dadurch gekennzeichnet, daß es sich bei dem zweiten Anwendungsprotokoll um ein Protokoll für einen elektronischen Briefdienst handelt.

9. Verfahren nach Anspruch 1, dadurch gekennzeichnet, daß der Entscheidungs-Logik (DEC; DEC') Daten, insbesondere Daten über Empfänger, verwendbare Protokolle und in Frage kommende Betriebsmittel, zugeführt werden.

10. Teilnehmerstation (T1, T2, T3) zum Versenden von Dokumenten an einen Empfänger, mit einer Speichereinrichtung (MEM1) für Dokumente, mit einer Konvertiereinrichtung (KONVERT1) zum Konvertieren des Datenformats eines in der Speichereinrichtung (MEM1) abgelegten Dokuments von einem ersten in ein zweites Datenformat (DAT1/DAT2), mit einer Schnittstelle zum Übertragen von Dokumenten mittels eines Protokolls für den Datenaustausch über Weitverkehrskommunikationsnetze (KN1) und mit einer Steuereinrichtung (CONTR1) zur Steuerung der Übertragung der Dokumente, **dadurch gekennzeichnet,** daß die Steuereinrichtung (CONTR1) so ausgestaltet ist, daß sie unabhängig vom Empfänger die Dokumente immer an eine Konverterstation sendet.

11. Konverterstation (KON) zum Versenden von Dokumenten, **dadurch gekennzeichnet,** daß die Konverterstation (KON) mit einer ersten, einer zweiten und einer dritten Kommunikationseinrichtung (KOM2/KOM3/KOM4), mit einer Konvertiereinrichtung (KONVERT2) und mit einer Entscheidungs-Logik (DEC) versehen ist, daß die erste Kommunikationseinrichtung (KOM2) zum Empfang von einem ersten Datenformat (DAT2) entsprechenden Dokumenten mittels eines Protokolls für den Austausch von Daten über Weitverkehrskommunikationsnetze geeignet ist, daß die zweite Kommunikationseinrichtung (KOM3) zum Senden von Dokumenten mittels eines ersten Anwendungsprotokolls, dem das erste Datenformat (DAT2) entspricht, geeignet ist, daß die dritte Kommunikationseinrichtung (KOM4) zum Senden von einem zweiten Datenformat (DAT3) entsprechenden Dokumenten an mehrere postalische Ausgabestationen (P1, P2, P3) geeignet ist, daß die Konvertiereinrichtung (KONVERT2) zur Konvertierung von Dokumenten von dem ersten Datenformat (DAT2) in das zweite Datenformat (DAT3) geeignet ist, und daß die Entscheidungs-Logik (DEC) so ausgestaltet ist, daß sie bei jedem ankommenden Dokument entscheidet, ob das Dokument mittels des ersten Anwendungsprotokolls an seinen Empfänger versendbar ist oder nicht.

12. Teilnehmerstation (T1') zum Versenden von Dokumenten an einen Empfänger, mit einer Speichereinrichtung (MEM1) für Dokumente, mit einer Konvertiereinrichtung (KONVERT1) zum Konvertieren des Datenformats eines in der Speichereinrichtung abgelegten Dokuments von einem ersten in ein zweites Datenformat (DAT1/DAT2), mit einer Kommunikationseinrichtung (KOM1) zum Versenden eines Dokuments gemäß dem zweiten Datenformat (DAT2) mittels eines ersten Anwendungsprotokolls, dem das zweite Datenformat (DAT2) entspricht, **dadurch gekennzeichnet,** daß die Teilnehmerstation (T1') mit einer Entscheidungs-Logik (DEC') versehen ist, die so ausgestaltet ist, daß sie beim Versenden eines Dokuments mittels des Dokuments im zweiten Datenformat (DAT2) entscheidet, ob das Dokument an den Empfänger mittels des ersten Anwendungsprotokolls versendbar ist oder nicht, und daß sie im Fall der Versendbarkeit die Versendung des Dokuments durch die Kommunikationseinrichtung (KOM1) an den Empfänger und ansonsten an eine Konverterstation (KON') veranlaßt.

## Claims

1. A method of dispatching documents, whereby a document to be dispatched to a recipient is converted from a first data format (DAT1) to a second data format (DAT2) at a customer station (T1, T2, T3; T1'), where the second data format (DAT2) corresponds to a first application protocol, characterized in that following the conversion to the second data format (DAT2), a decision is made in a decision logic (DEC; DEC') by means of the document in the second data format (DAT2), as to whether or not the document can be transmitted to the recipient by using the first application protocol, that in case it is transmissible, the converted document is transmitted to a customer station (T1, T2, T3; T1') of the recipient by means of the first application protocol, and that otherwise a converter station (KON; KON') converts the converted document into a third postal data format (DAT3) and then transmits it to a postal distribution station (P1, P2, P3) where the document is then printed.

2. A method as claimed in claim 1, characterized in that in the event the customer station (T1') contains the decision logic (DEC'), and the document cannot be transmitted by means of the first application protocol, the customer station (T1') transmits the document to the converter station.

3. A method as claimed in claim 1, characterized in that in the event the converter station (KON) contains the decision logic (DEC), the converter station (KON) transmits the document to the customer station (T1, T2, T3) or to the postal distribution station (P1, P2, P3).

4. A method as claimed in claim 3, characterized in that the document is transmitted from the customer station (T1, T2, T3) to the converter station (KON; KON') by using the first application protocol.

5. A method as claimed in claim 3, characterized in that by using a further protocol, the document is transmitted transparently from the customer station (T1, T2, T3; T1') to the converter station (KON, KON').

6. A method as claimed in claim 1, characterized in that the first application protocol is a protocol for electronic business communication.

7. A method as claimed in claim 1, characterized in that the decision logic (DEC; DEC') has the further possibility of deciding for a transmission by using a second application protocol.

8. A method as claimed in claim 7, characterized in that the second application protocol is a protocol for electronic mail service.

9. A method as claimed in claim 1, characterized in that data, particularly data about recipients, about usable protocols and suitable operating means, are supplied to the decision logic (DEC; DEC').

10. A customer station (T1, T2 and T3), for dispatching documents to a recipient, with a memory device (MEM1) for documents, a converting device (KONVERT1) for converting the data format of a document stored in the memory device (MEM1) from a first to a second data format (DAT1/DAT2), with an interface for transmitting documents by using a protocol for exchanging data via long-range communication networks, and with a control device (CONTR1) for controlling the transmission of the documents, characterized in that the control device (CONTR1) is designed to always transmit the documents to a converter station, independently of the recipient.

11. A converter station (KON) for dispatching documents, characterized in that the converter station (KON) is equipped with a first, a second and a third communication device (KOM2/KOM3/KOM4), with a converting device (KONVERT2) and a decision logic (DEC), that the first communication device (KOM2) is able to receive a document that corresponds to a first data format (DAT2) by using a protocol for data exchange via long-range communication networks, that the second communication device (KOM3) is able to transmit documents by using a first application protocol to which the first data format (DAT2) corresponds, that the third communication device (KOM4) is able to dispatch documents which correspond to a second data format (DAT3), to several postal distribution stations (P1, P2, P3), that the converting device (KONVERT2) is able to convert documents from the first data format (DAT2) to the second data format (DAT3), and that the decision logic (DEC) is designed to decide for each incoming document whether or not the document can be transmitted to its recipient by using the first application protocol.

12. A customer station (T1') for dispatching documents to a recipient, with a memory device (MEM1) for documents, with a converting device (KONVERT1) for converting the data format of a document stored in the memory device from a first to a second data format (DAT1/DAT2), with a communication device (KOM1) for dispatching a document which corresponds to the second data format (DAT2) by using a first application protocol to which the second data format (DAT2) corresponds, characterized in that the customer station (T1') is equipped with a decision logic (DEC), which is designed to decide by means of the document in the second data format (DAT2) whether or not the document can be transmitted to the recipient by using the first application protocol, and that in the affirmative case it causes the document to be dispatched to the recipient via the communication device (KOM1), and otherwise to a converter station (KON').

## Revendications

1. Procédé pour envoyer des documents dans lequel, dans un poste de réseau (T1, T2, T3; T1'), un document à envoyer à un destinataire est converti depuis un premier format de données (DAT1) en un deuxième format de données (DAT2), le deuxième format de données (DAT2) correspondant à un premier protocole d'application, caractérisé en ce qu'après la conversion au deuxième format de données (DAT2) dans une logique de décision (DEC; DEC') au moyen du document au deuxième format de données (DAT2) il est décidé si le document peut être envoyé au destinataire au moyen du premier protocole d'application ou non, en ce que, si l'envoi est possible, le document converti au moyen du premier protocole d'application est envoyé à un poste de réseau (T1, T2, T3; T1') du destinataire, et en ce que dans le cas contraire, une station de conversion (KON; KON') convertit le document converti en un troisième format de données postal (DAT3) et l'envoie ensuite à une station postale de sortie (P1, P2, P3) qui imprime ensuite le document.

2. Procédé selon la revendication 1, caractérisé en ce que dans le cas où le poste de réseau (T1') contiendrait la logique de décision (DEC'), le poste de réseau (T1') envoie le document à la station de conversion au moyen du premier protocole d'application si la possibilité d'envoi n'est pas possible.

3. Procédé selon la revendication 1, caractérisé en ce que dans le cas où la station de conversion (KON) contient la logique de décision (DEC), la station de conversion (KON) envoie le document au poste de réseau (T1, T2, T3) ou à la station postale de sortie (P1, P2, P3).

4. Procédé selon la revendication 3, caractérisé en ce que le document est envoyé par le poste de réseau (T1, T2, T3; T1') à la station de conversion (KON; KON') au moyen du premier protocole d'application.

5. Procédé selon la revendication 3, caractérisé en ce que le document est envoyé de façon transparente par le poste de réseau (T1, T2, T3; T1') à la station de conversion (KON; KON') au moyen d'un autre protocole.

6. Procédé selon la revendication 1, caractérisé en ce que le premier protocole d'application est un protocole pour le trafic commercial électronique.

7. Procédé selon la revendication 1, caractérisé en ce que la logique de décision (DEC; DEC') a en outre la possibilité de décider l'envoi au moyen d'un deuxième protocole d'application.

8. Procédé selon la revendication 7, caractérisé en ce que le deuxième protocole d'application est un protocole pour un service de courrier électronique.

9. Procédé selon la revendication 1, caractérisé en ce que la logique de décision (DEC; DEC') reçoit des données, en particulier des données concernant le destinataire, les protocoles utilisables et les ressources envisageables.

10. Poste de réseau (T1, T2, T3) pour envoyer des documents à un destinataire, équipée d'un dispositif de stockage (MEM1) pour des documents, d'un dispositif de conversion (KONVERT1) pour convertir le format de données d'un document déposé dans le dispositif de stockage (MEM1) depuis un premier à un deuxième format de données (DAT1/DAT2), d'une interface pour transmettre des documents au moyen d'un protocole pour l'échange de données à travers le réseau de communication longue distance (KN1) et d'un dispositif de commande (CONTR1) pour contrôler la transmission des documents, caractérisé en ce que le dispositif de commande (CONTR1) est réalisé de telle sorte qu'il envoie toujours les documents à une station de conversion indépendamment du destinataire.

11. Station de conversion (KON) pour envoyer des documents, caractérisée en ce que la station de conversion (KON) dispose d'un premier, d'un deuxième et d'un troisième dispositif de communication (KOM2/KOM3/KOM4), d'un dispositif de conversion (KONVERT2) et d'une logique de décision (DEC), en ce que le premier dispositif de communication (KOM2) est capable de recevoir des documents correspondant à un premier format de données (DAT2) au moyen d'un protocole pour échanger des données à travers des réseaux de communication longue distance, en ce que le deuxième dispositif de communication (KOM3) est capable d'envoyer des documents au moyen d'un premier protocole d'application correspondant au premier format de données (DAT2), en ce que le troisième dispositif de communication (KOM4) est capable d'envoyer des documents correspondant à un deuxième format de données (DAT3) à plusieurs stations postales de sortie (P1, P2, P3), en ce que le dispositif de conversion (KONVERT2) est capable de convertir des documents depuis le premier format de données (DAT2) au deuxième format de données (DAT3), et en ce que la logique de décision (DEC) est réalisée de telle sorte qu'elle décide pour chaque document entrant si le document peut être envoyé à son destinataire au moyen du premier protocole d'application ou non.

12. Poste de réseau (T1') pour envoyer des documents à un destinataire, équipée d'un dispositif de stockage (MEM1) pour des documents, d'un dispositif de conversion (KONVERT1) pour convertir le format de données d'un document déposé dans le dispositif de stockage (MEM1) depuis un premier à un deuxième format de données (DAT1/DAT2), d'un dispositif de communication (KOM1) pour envoyer un document selon le deuxième format de données (DAT2) au moyen d'un premier protocole d'application correspondant au deuxième format de données (DAT2), caractérisé en ce que le poste de réseau (T1') dispose d'une logique de décision (DEC') réalisée de telle sorte qu'elle décide, lors de l'envoi d'un document, au moyen du document au deuxième format de données (DAT2) si le document peut être envoyé au destinataire au moyen du premier protocole d'application ou non, et en ce que, dans le cas où l'envoi serait possible, elle déclenche l'envoi du document par l'intermédiaire du dispositif de communication (KOM1) au destinataire, ou dans le cas contraire à une station de conversion (KON').
